(19) Europäisches Patentamt / European Patent Office / Office européen des brevets

(11) **EP 3 624 494 B1**

(12) **EUROPEAN PATENT SPECIFICATION**

(45) Date of publication and mention
of the grant of the patent:
**31.08.2022 Bulletin 2022/35**

(51) International Patent Classification (IPC):
**H04W 36/00** *(2009.01)* **H04B 7/06** *(2006.01)*
**H04W 48/16** *(2009.01)* H04B 7/04 *(2017.01)*

(21) Application number: **19192378.8**

(22) Date of filing: **26.11.2014**

(52) Cooperative Patent Classification (CPC):
**H04W 36/0088; H04B 7/06; H04W 48/16;**
H04B 7/04

(54) **TRANSMISSION MODE SWITCHING METHOD AND DEVICE**

VERFAHREN UND VORRICHTUNG ZUR ÜBERTRAGUNGSMODUSUMSCHALTUNG

PROCÉDÉ ET DISPOSITIF DE COMMUTATION DE MODE DE TRANSMISSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.11.2013 CN 201310608605**

(43) Date of publication of application:
**18.03.2020 Bulletin 2020/12**

(62) Document number(s) of the earlier application(s) in
accordance with Art. 76 EPC:
**14865455.1 / 3 065 460**

(73) Proprietor: **HUAWEI TECHNOLOGIES CO., LTD.
Shenzhen, Guangdong 518129 (CN)**

(72) Inventors:
• **HU, Wenquan
Shenzhen, Guangdong 518129 (CN)**
• **ZHAO, Weijie
Shenzhen, Guangdong 518129 (CN)**
• **HUA, Meng
Shenzhen, Guangdong 518129 (CN)**

(74) Representative: **Gill Jennings & Every LLP
The Broadgate Tower
20 Primrose Street
London EC2A 2ES (GB)**

(56) References cited:
**EP-B1- 2 918 091** **WO-A1-2015/033321**
**WO-A2-2014/074055**

• **ERICSSON ET AL: "Link Level Simulation Results
for Combined Cell Deployment", 3GPP DRAFT;
R1-133646 LINK LEVEL SIMULATION RESULTS
FOR COMBINED CELL DEPLOYMENT, 3RD
GENERATION PARTNERSHIP PROJECT (3GPP),
MOBILE COMPETENCE CENTRE ; 650, ROUTE
DES LUCIOLES ; F-06921 SOPHIA-ANTIPOL , vol.
RAN WG1, no. Barcelona, Spain; 20130819 -
20130823 10 August 2013 (2013-08-10),
XP050716734, Retrieved from the Internet:
URL:http://www.3gpp.org/ftp/tsg_ran/WG1_RL
1/TSGR1_74/Docs/ [retrieved on 2013-08-10]**
• **ERICSSON ET AL: "Mobility and Node Selection
in Combined Cell Deployment for Heterogeneous
Networks", 3GPP DRAFT; R2-132620 MOBILITY
AND NODE SELECTION IN COMBINED CELL
DEPLOYMENT FOR HETEROGENEOUS
NETWORKS, 3RD GENERATION PARTNERSHIP
PROJECT (3GPP), MOBILE COMPETENCE
CENTRE ; 650, ROUTE DES LUCIOLES , vol. RAN
WG2, no. Barcelona, Spain; 20130819 - 20130823
10 August 2013 (2013-08-10), XP050718440,
Retrieved from the Internet:
URL:http://www.3gpp.org/ftp/tsg_ran/WG2_RL
2/TSGR2_83/Docs/ [retrieved on 2013-08-10]**

**Description**

**TECHNICAL FIELD**

Embodiments of the present invention relate to a communications technology, and in particular, to a transmission mode switching method and a device.

**BACKGROUND**

In a universal mobile telecommunications system (Universal Mobile Telecommunications System, UMTS for short), a combined cell is a logical cell to which cells corresponding to multiple coverage areas belong. When user equipment (User Equipment, UE for short) moves in the different coverage areas, higher layer signaling exchange does not occur, and transceiver nodes in the combined cell send a primary common pilot channel by using a same scrambling code.

The combined cell generally includes a high power node (High Power Node, HPN for short) and a low power node (Low Power Node, LPN for short), and the nodes are connected to a central processor of the nodes by using low latency links. According to different locations of the UE, there are three transmission modes in the combined cell: Mode (Mode) 1 is node selection, mode 2 is wave speed forming, and mode 3 is multiplexing. mode 1 is applicable to a scenario in which a strength of a received downlink signal of a node is much greater than a strength of a received signal of another node, and mode 2 and mode 3 are applicable to a scenario in which received downlink signals of different nodes are of about a same strength.

In different scenarios, the central processor needs to determine which mode should be used in the combined cell to send downlink data for the UE. In the prior art, during mode switching, resource reconfiguration needs to be completed by using higher layer signaling. Much signaling is exchanged in the switching process, leading to a relatively long switching latency.

Ericcson et al: "Link Level Simulation Results for Combined Cell Deployment", 3GPP draft, 10 August 2013 discloses link simulation results with spatial reuse mode.

Ericcson et al: "Mobility and Node Selection in Combined Cell Deployment for Heterogeneous Networks", 3GPP draft, 10 August 2013 discloses handovers between cells for the combined cell deployment in a heterogeneous network. It also gives an example of how transmission node selection can be done within a combined cell.

WO 2015/033321 A1 discloses distributed node operation in heterogeneous networks.

**SUMMARY**

Embodiments of the present invention provide transmission mode switching methods and devices according to the claims to reduce a latency for downlink transmission mode switching.

In the transmission mode switching method and the device provided in the embodiments of the present invention, UE monitors pilot signals sent by at least two nodes, where the pilot signals sent by the different nodes are different, and the pilot signals are used for differentiating the at least two nodes; and the UE sends a physical layer measurement result report to a base station (NodeB) if the UE determines, according to the detected pilot signals, that measurement results of the pilot signals of the at least two nodes meet a preset trigger condition, so that the NodeB performs downlink transmission mode switching. In this way, a latency for downlink transmission mode switching is reduced.

**BRIEF DESCRIPTION OF DRAWINGS**

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and a person of ordinary skill in the art may still derive other drawings from these accompanying drawings without creative efforts.

FIG. 1 is a flowchart of Embodiment 1 of a transmission mode switching method according to the present invention;
FIG. 2 is a flowchart of Embodiment 2 of a transmission mode switching method according to the present invention;
FIG. 3 is a schematic structural diagram of an embodiment of UE according to the present invention; and
FIG. 4 is a schematic structural diagram of an embodiment of a NodeB according to the present invention.

**DESCRIPTION OF EMBODIMENTS**

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

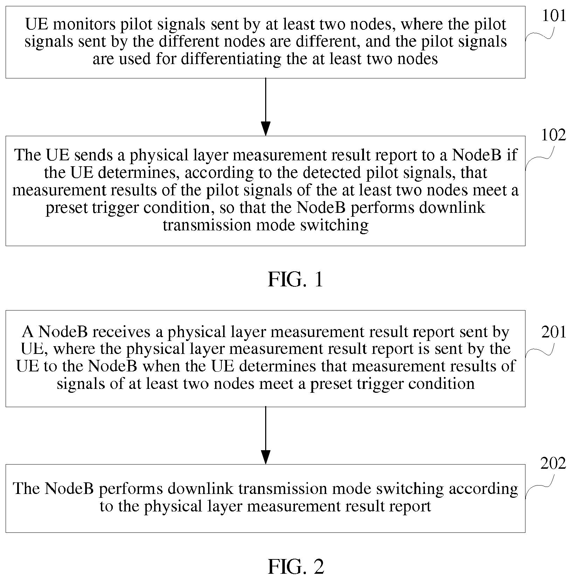

FIG. 1 is a flowchart of Embodiment 1 of a transmission mode switching method according to the present invention. As shown in FIG. 1, the method provided in this embodiment may be specifically executed by user equipment, and the method provided in this embodiment may specifically include:

Step 101: The UE monitors pilot signals sent by at least two nodes, where the pilot signals sent by the different nodes are different, and the pilot signals are used for differentiating the at least two nodes.

Specifically, the at least two nodes send the pilot signals in at least one of the following manners: different timeslots, different scrambling codes, and different channelization codes. For example, different nodes may construct different pilot signals by using different timeslots, or may construct different pilot signals by using different scrambling codes, or may construct different pilot signals by using different channelization codes, or may use any combination of the foregoing manners, which is not limited in this embodiment.

Step 102: The UE sends a physical layer measurement result report to a NodeB if the UE determines, according to the detected pilot signals, that measurement results of the pilot signals of the at least two nodes meet a preset trigger condition, so that the NodeB performs downlink transmission mode switching.

It should be noted that the preset trigger condition may be: the UE detects that a parameter value of the pilot signals sent by the at least two nodes falls within a preset threshold range; or the preset trigger condition may be: the UE detects that a parameter value of the pilot signals sent by the at least two nodes falls beyond a preset threshold range. The parameter value of the pilot signals is any one of the following: a strength of the pilot signals, a channel quality value, and a path gain value, which is not limited in this embodiment.

For example, if the UE detects that a strength difference between a strength of a downlink pilot signal of an LPN and a strength of a downlink pilot signal of an HPN falls within or falls beyond a preset threshold range [-3 dB, 3 dB], the UE triggers reporting physical layer measurement results, that is, sends the physical layer measurement result report to the NodeB. Optionally, the physical layer measurement result report includes at least one of the following information: information about a channel quality indicator (Channel Quality Indicator, CQI for short), information about a path gain (Path Gain), information about a ratio of a chip power to a noise power (Ec/No), and information about a received signal code power (Received Signal Code Power, RSCP for short), which is not limited in this embodiment.

In actual application, further, if the UE uses a closed loop transmit diversity (Closed Loop Transmit Diversity, CLTD for short) in mode 2, after the UE sends the physical layer measurement result report to the NodeB, the UE may further receive a mode switching indication that is sent by the NodeB by using a downlink high speed-shared control channel (High Speed-Shared Contorl Channel, HS-SCCH for short), where the mode switching indication includes information about a downlink transmission mode. Optionally, the mode switching indication may further include information about a node that sends downlink data.

It should be noted that if a receiver capability of the UE is supporting only mode 1 and mode 2, and in mode 2, the UE uses an open loop transmit diversity (Open Loop Transmit Diversity, OLTD for short), in this case, the UE does not need to know which transmission mode is used on a network side, and therefore the NodeB does not need to send the mode switching indication to the UE.

In the technical solution in this embodiment, UE monitors pilot signals sent by at least two nodes, where the pilot signals sent by the different nodes are different, and the pilot signals are used for differentiating the at least two nodes; and the UE sends a physical layer measurement result report to a NodeB if the UE determines, according to the detected pilot signals, that measurement results of the pilot signals of the at least two nodes meet a preset trigger condition, so that the NodeB performs downlink transmission mode switching. In this way, a latency for downlink transmission mode switching is reduced.

FIG. 2 is a flowchart of Embodiment 2 of a transmission mode switching method according to the present invention. As shown in FIG. 2, the method provided in this embodiment may be specifically executed by a NodeB, and the method provided in this embodiment may specifically include:

Step 201: The NodeB receives a physical layer measurement result report sent by UE, where the physical layer measurement result report is sent by the UE to the NodeB when the UE determines that measurement results of signals of at least two nodes meet a preset trigger condition.

In this step, the physical layer measurement result report includes at least one of the following information: information about a channel quality indicator, information about a path gain, information about a ratio of a chip power to a noise power, and information about a received signal code power.

Step 202: The NodeB performs downlink transmission mode switching according to the physical layer measurement result report.

In actual application, if the UE uses a CLTD in mode 2, after the NodeB performs downlink transmission mode switching, the NodeB further needs to send a mode switching indication to the UE by using an HS-SCCH, where the mode switching indication is used for indicating to the UE that downlink transmission enters a different transmission mode, and the mode switching indication includes information about a downlink transmission mode. Optionally, the mode switching indication may further include information about a node that sends downlink data.

In the technical solution in this embodiment, a NodeB receives a physical layer measurement result report sent by user equipment UE, where the physical layer measurement result report is sent by the UE to the NodeB when the UE determines that measurement results of signals of at least two nodes meet a preset trigger condition; and the NodeB performs downlink transmission mode switching according to the physical layer measurement result report. In this way, a latency for downlink transmission mode switching is reduced.

In the method for transmission mode switching provided in this embodiment, a process of performing downlink transmission mode switching is:

The UE continuously monitors pilot signals sent by different nodes. To differentiate different nodes, the nodes need to use different pilot signals, for example, construct different pilot signals by using different timeslots, and/or construct different pilot signals by using different scrambling codes, and/or construct different pilot signals by using different channelization codes to implement differentiation. Specifically, by monitoring pilot signals sent by different nodes, the UE may obtain measurement results shown in Table 1.

**Table 1 Measurement result**

| Identification of node | Measurement result |
| --- | --- |
| 0 | RSCP0(Ec/No, Path Gain, CQI) |
| 1 | RSCP1(Ec/No, Path Gain, CQI) |
| 2 | RSCP2(Ec/No, Path Gain, CQI) |
| 3 | RSCP3(Ec/No, Path Gain, CQI) |

When the UE detects that a parameter value of the pilot signals falls within or falls beyond a preset threshold range, for example, a strength difference between a strength of a downlink pilot signal of an LPN received by the UE and a strength of a downlink pilot signal of an HPN received by the UE falls within or falls beyond [-3 dB, 3 dB], the UE triggers reporting physical layer measurement results, that is, the UE sends the physical layer measurement result report to the NodeB. Optionally, the physical layer measurement result report may include information about a CQI, and/or information about a path gain, and/or information about an Ec/No, and/or information about an RSCP, which is not limited in this embodiment.

After the NodeB receives the physical layer measurement result report, the NodeB may determines, according to information in the physical layer measurement result report, whether a downlink transmission mode is switched to mode 2 or mode 3. To avoid a ping-pong effect, a hysteresis mechanism may be further introduced.

That the information about the RSCP is included in the physical layer measurement result report is used as an example. Assuming that an initial transmission mode of the UE is mode 1, a determining criterion for determining whether the downlink transmission mode is switched to mode 2 or mode 3 is as follows:

a condition for switching to mode 2 or mode 3 from mode 1 is: at least one monitored node satisfies a first inequality: |a measured value of an RSCP of the monitored node - an RSCP value of a current node| $\leq$ 3 - H1, where HI is a first hysteresis parameter; and
a condition for switching to mode 1 from mode 2 or mode 3 is: at least one monitored node satisfies a second inequality: |a measured value of an RSCP of a currently selected first node - an RSCP value of a currently selected second node| $\geq$ 3 + H2, where H2 is a second hysteresis parameter.

It should be noted that H1 and H2 may be equal or unequal, which is not limited in this embodiment.

The NodeB may send a mode switching indication by using an HS-SCCH according to a transmission mode supported by the UE. If a receiver capability of the UE is supporting only mode 1 and mode 2, and the UE uses an OLTD in mode 2, when the NodeB performs downlink transmission mode switching, the NodeB does not need to send the mode switching indication to the UE. If the UE uses a closed loop transmit diversity (Closed Loop Transmit Diversity, CLTD for short) in mode 2, when the NodeB performs downlink transmission mode switching, the NodeB needs to send the mode switching indication to the UE.

If a receiver capability of the UE is supporting mode 1, mode 2 and mode 3, when the NodeB sends the mode switching indication to the UE, the mode switching indication not only needs to include information about a downlink transmission mode, but also needs to include information about a node that sends downlink data, that is, indicates, to the UE, the NodeB uses which nodes to send the downlink data to the UE, to facilitate correct reception by the UE.

Assuming that measurement results reported by the UE include measurement results of four nodes at most, and when downlink data transmission is implemented, at most two nodes can simultaneously send data to the UE, in mode 3, $C_4^2 = 6$ different combinations of nodes sending downlink data need to be indicated, and at least three bits (bits) are required to indicate the transmission mode.

For example, in a scenario in which a receiver capability of the UE is supporting all of mode 1, mode 2 and mode 3, a mapping relationship between a bit mode used by the mode switching indication and a downlink transmission mode is shown in Table 2 and Table 3:

**Table 2 UE uses OLTD in mode 2**

| Bit mode | Downlink transmission mode |
|---|---|
| 000 | mode 1, mode 2 |
| XXX | mode 3 + Node X + Node Y |

The three bits 000 are used for indicating to the UE that the downlink transmission mode is to be switched to mode 1 or mode 2. Any three bits except 000 are used for indicating to the UE that the downlink transmission mode is to be switched to mode 3, and indicates to the UE that the NodeB will use the node X and the node Y to send downlink data, to facilitate correct reception by the UE.

**Table 3 UE uses CLTD in mode 2**

| Bit mode | Downlink transmission mode |
|---|---|
| 0000 | mode 1 |
| XXXX | mode 2 + Node X + Node Y |
| YYYY | mode 3 + Node X + Node Y |

The four bits 0000 are used for indicating to the UE that the downlink transmission mode is to be switched to mode 1. The four bits XXXX are used for indicating to the UE that the downlink transmission mode is to be switched to mode 2, and indicates to the UE that the NodeB will use the node X and the node Y to send downlink data to the UE. The four bits YYYY are used for indicating to the UE that the downlink transmission mode is to be switched to mode 3, and indicates to the UE that the NodeB will use the node X and the node Y to send downlink data to the UE, to facilitate correct reception by the UE.

In a scenario in which a receiver capability of the UE is supporting only mode 1 and mode 2, a mapping relationship between a bit mode used by the mode switching indication and a downlink transmission mode is shown in Table 4:

**Table 4 UE uses CLTD in mode 2**

| Bit mode | Downlink transmission mode |
|---|---|
| 000 | mode 1 |
| XXX | mode 2 + Node X + Node Y |

The three bits 000 are used for indicating to the UE that the downlink transmission mode is to be switched to mode 1. The three bits XXX except 000 are used for indicating to the UE that the downlink transmission mode is to be switched to mode 2, and indicates to the UE that the NodeB will use the node X and the node Y to send downlink data to the UE.

In the technical solution in this embodiment, UE can trigger a process for downlink transmission mode switching, and mode switching can be completed without higher layer signaling exchange, thereby reducing a latency for downlink transmission mode switching.

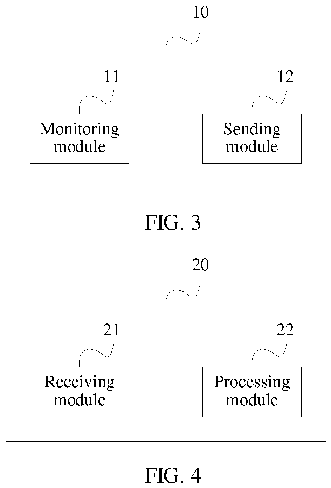

FIG. 3 is a schematic structural diagram of Embodiment 1 of UE according to the present invention. As shown in FIG. 3, the UE 10 provided in this embodiment may specifically include a monitoring module 11 and a sending module 12, where

the monitoring module 11 may be configured to monitor pilot signals sent by at least two nodes, where the pilot signals sent by the different nodes are different, and the pilot signals are used for differentiating the at least two nodes; and the sending module 12 may be configured to send a physical layer measurement result report to a NodeB if the UE determines, according to the detected pilot signals, that measurement results of the pilot signals of the at least two nodes meet a preset trigger condition, so that the NodeB performs downlink transmission mode switching.

Further, the UE 10 may further include a receiving module, configured to receive a mode switching indication that is sent by the NodeB by using an HS-SCCH, where the mode switching indication includes information about a downlink transmission mode. Optionally, the mode switching indication further includes information about a node that sends downlink data.

Specifically, the preset trigger condition may be: the UE detects that a parameter value of the pilot signals sent by the at least two nodes falls within a preset threshold range; or the UE detects that a parameter value of the pilot signals sent by the at least two nodes falls beyond a preset threshold range.

The parameter value of the pilot signals is any one of the following: a strength of the pilot signals, a channel quality value, and a path gain value. The at least two nodes send the pilot signals in at least one of the following manners: different timeslots, different scrambling codes, and different channelization codes. The physical layer measurement result report includes at least one of the following information: information about a channel quality indicator, information about a path gain, information about a ratio of a chip power to a noise power, and information about a received signal code power. No limitation is set thereto in this embodiment.

The UE in this embodiment can be configured to execute the technical solution in the foregoing method embodiments, and the implementation principles and technical effects thereof are similar, which are not described in detail herein again.

FIG. 4 is a schematic structural diagram of an embodiment of a NodeB according to the present invention. As shown in FIG. 4, the NodeB 20 provided in this embodiment may specifically include a receiving module 21 and a processing module 22, where

the receiving module 21 may be configured to receive a physical layer measurement result report sent by user equipment UE, where the physical layer measurement result report is sent by the UE to the NodeB when the UE determines that measurement results of signals of at least two nodes meet a preset trigger condition; and
the processing module 22 may be configured to perform downlink transmission mode switching according to the physical layer measurement result report.

Further, the NodeB 20 may further include a sending module, configured to send a mode switching indication by using an HS-SCCH, where the mode switching indication is used for indicating to the UE that downlink transmission enters a different transmission mode; and the mode switching indication includes information about a downlink transmission mode. Optionally, the mode switching indication further includes information about a node that sends downlink data.

Specifically, the physical layer measurement result report includes at least one of the following information: information about a channel quality indicator, information about a path gain, information about a ratio of a chip power to a noise power, and information about a received signal code power, which is not limited in this embodiment.

The NodeB in this embodiment can be configured to execute the technical solution in the foregoing method embodiments, and the implementation principles and technical effects thereof are similar, which are not described in detail herein again.

In the several embodiments provided in the present invention, it should be understood that the disclosed apparatus and method may be implemented in other manners. For example, the described apparatus embodiment is merely exemplary. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present application may be integrated into one processing unit, or each of the units may exist alone physically, or two or more units are integrated into one unit. The integrated unit may be implemented in a form of hardware, or may be implemented in a form of a software functional unit.

When the foregoing integrated unit is implemented in a form of a software functional unit, the integrated unit may be stored in a computer-readable storage medium. The software functional unit is stored in a storage medium and includes several instructions for instructing a computer device (which may be a personal computer, a server, or a network device) or a processor to perform a part of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

It may be clearly understood by persons skilled in the art that, for the purpose of convenient and brief description, division of the foregoing functional modules is taken as an example for illustration. In actual application, the foregoing functions can be allocated to different functional modules and implemented according to a requirement, that is, an inner structure of an apparatus is divided into different functional modules to implement all or some of the functions described above. For a detailed working process of the foregoing apparatus, reference may be made to a corresponding process in the foregoing method embodiments, and details are not described herein again.

Finally, it should be noted that the foregoing embodiments are merely intended for describing the technical solutions of the present invention, but not for limiting the present invention as defined by the appended claims. Although the present invention is described in detail with reference to the foregoing embodiments, persons of ordinary skill in the art should understand that they may still make modifications to the technical solutions described in the foregoing embodiments without departing from the scope of the technical solutions of the embodiments of the present invention as defined by the appended claims.

**Claims**

1.  A transmission mode switching method for transmission mode switching in a combined cell, comprising:

    monitoring (101), by user equipment, UE, pilot signals sent by at least two nodes, wherein the pilot signals sent by the different nodes are different, and the pilot signals are used for differentiating the at least two nodes; and
    sending (102), by the UE, a physical layer measurement result report to a base station, NodeB, if the UE determines, according to the detected pilot signals, that measurement results of the pilot signals of the at least two nodes meet a preset trigger condition; and
    receiving, by the UE, a mode switching indication that is sent by the NodeB by using a downlink high speed-shared control channel, HS-SCCH, wherein the mode switching indication comprises information about a downlink transmission mode and an information about a node that sends downlink data;
    wherein the preset trigger condition is: the UE detects that a parameter value of the pilot signals sent by the at least two nodes falls within a preset threshold range; or the UE detects that a parameter value of the pilot signals sent by the at least two nodes falls beyond a preset threshold range; wherein the parameter value of the pilot signals is any one of the following: a strength difference of the pilot signals, a channel quality difference, and a path gain difference.

2.  The method according to claim 1, wherein the at least two nodes send the pilot signals in at least one of the following manners: different timeslots, different scrambling codes, and different channelization codes.

3.  The method according to claim 1, wherein the physical layer measurement result report comprises at least one of the following information: information about a channel quality indicator, information about a path gain, the received energy per chip divided by the power density in the band, Ec/No, and information about a received signal code power.

4.  User equipment, UE, configured for enabling transmission mode switching in a combined cell, comprising:

    a monitoring module (11), configured to monitor pilot signals sent by at least two nodes, wherein the pilot signals sent by the different nodes are different, and the pilot signals are used for differentiating the at least two nodes; and
    a sending module (12), configured to send a physical layer measurement result report to a base station, NodeB, if the UE determines, according to the detected pilot signals, that measurement results of the pilot signals of the at least two nodes meet a preset trigger condition;
    a receiving module, configured to receive a mode switching indication that is sent by the NodeB by using a downlink high speed-shared control channel, HS-SCCH, wherein the mode switching indication comprises information about a downlink transmission mode and an information about a node that sends downlink data;
    wherein the preset trigger condition is: the UE detects that a parameter value of the pilot signals sent by the at least two nodes falls within a preset threshold range; or the UE detects that a parameter value of the pilot signals sent by the at least two nodes falls beyond a preset threshold range; wherein the parameter value of the pilot signals is any one of the following: a strength difference of the pilot signals, a channel quality difference, and a path gain difference.

5. A processor, wherein the chip comprises at least one programmable logic circuits and a program instruction, and when running, the chip is configured to perform a transmission mode switching method for transmission mode switching in a combined cell, comprising:

monitoring (101), by user equipment, UE, pilot signals sent by at least two nodes, wherein the pilot signals sent by the different nodes are different, and the pilot signals are used for differentiating the at least two nodes; and sending (102), by the UE, a physical layer measurement result report to a base station, NodeB, if the UE determines, according to the detected pilot signals, that measurement results of the pilot signals of the at least two nodes meet a preset trigger condition;and

receiving, by the UE, a mode switching indication that is sent by the NodeB by using a downlink high speed-shared control channel, HS-SCCH, wherein the mode switching indication comprises information about a downlink transmission mode and an information about a node that sends downlink data wherein the preset trigger condition is: the UE detects that a parameter value of the pilot signals sent by the at least two nodes falls within a preset threshold range; or the UE detects that a parameter value of the pilot signals sent by the at least two nodes falls beyond a preset threshold range; wherein the parameter value of the pilot signals is any one of the following: a strength difference of the pilot signals, a channel quality difference, and a path gain difference.

6. A non-transitory computer readable storage medium, comprising an instruction, wherein when the instruction runs on a computer, the computer performs a transmission mode switching method for transmission mode switching in a combined cell, comprising:

monitoring (101), by user equipment, UE, pilot signals sent by at least two nodes, wherein the pilot signals sent by the different nodes are different, and the pilot signals are used for differentiating the at least two nodes; and sending (102), by the UE, a physical layer measurement result report to a base station, NodeB, if the UE determines, according to the detected pilot signals, that measurement results of the pilot signals of the at least two nodes meet a preset trigger condition; and

receiving, by the UE, a mode switching indication that is sent by the NodeB by using a downlink high speed-shared control channel, HS-SCCH, wherein the mode switching indication comprises information about a downlink transmission mode and an information about a node that sends downlink data wherein the preset trigger condition is: the UE detects that a parameter value of the pilot signals sent by the at least two nodes falls within a preset threshold range; or the UE detects that a parameter value of the pilot signals sent by the at least two nodes falls beyond a preset threshold range; wherein the parameter value of the pilot signals is any one of the following: a strength difference of the pilot signals, a channel quality difference, and a path gain difference.

**Patentansprüche**

1. Verfahren zur Übertragungsmodusumschaltung für die Übertragungsmodusumschaltung in einer kombinierten Zelle, umfassend:

Überwachen (101) von Pilotsignalen, die von mindestens zwei Knoten gesendet werden, durch eine Benutzereinrichtung, UE, wobei die Pilotsignale, die von den verschiedenen Knoten gesendet werden, unterschiedlich sind, und die Pilotsignale zum Unterscheiden der mindestens zwei Knoten verwendet werden; und Senden (102) eines physikalischen Schichtmessergebnisberichts durch die UE an einen Basisstation-NodeB, wenn die UE gemäß den erfassten Pilotsignalen bestimmt, dass Messergebnisse der Pilotsignale der mindestens zwei Knoten eine voreingestellte Triggerbedingung erfüllen, und Empfangen einer Modusumschaltangabe durch die UE, die durch den NodeB unter Verwendung eines gemeinsamen Downlink-Hochgeschwindigkeitssteuerkanals (High Speed-Shared Control Channel, HS-SCCH) gesendet wird, wobei die Modusumschaltangabe Informationen über einen Downlink-Übertragungsmodus und Informationen über einen Knoten, der Downlinkdaten sendet, umfasst; wobei die voreingestellte Triggerbedingung ist: die UE erfasst, dass ein Parameterwert der Pilotsignale, die von den mindestens zwei Knoten gesendet werden, in einen voreingestellten Schwellenbereich fällt; oder die UE erfasst, dass ein Parameterwert der Pilotsignale, die von den mindestens zwei Knoten gesendet werden, außerhalb eines voreingestellten Schwellenbereich fällt; wobei der Parameterwert der Pilotsignale eines von Folgendem ist: eine Stärkedifferenz der Pilotsignale, eine Kanalqualitätsdifferenz und eine Pfadverstärkungsdifferenz.

2. Verfahren nach Anspruch 1, wobei die mindestens zwei Knoten die Pilotsignale auf mindestens eine der folgenden Arten senden: verschiedene Zeitschlitze, verschiedene Verschlüsselungscodes und verschiedene Kanalisierungscodes.

3. Verfahren nach Anspruch 1, wobei der physikalische Schichtmessergebnisbericht mindestens eine der folgenden Informationen umfasst: Informationen über einen Kanalqualitätsindikator, Informationen über eine Pfadverstärkung, die empfangene Energie pro Chip geteilt durch die Leistungsdichte in dem Band, Ec/No, und Informationen über eine empfangene Signalcodeleistung.

4. Benutzereinrichtung (UE), die konfiguriert ist, um ein Übertragungsmodusumschalten in einer kombinierten Zelle zu ermöglichen, umfassend:

ein Überwachungsmodul (11), das konfiguriert ist, um Pilotsignale zu überwachen, die von mindestens zwei Knoten gesendet werden, wobei die Pilotsignale, die von den verschiedenen Knoten gesendet werden, unterschiedlich sind, und die Pilotsignale zum Unterscheiden der mindestens zwei Knoten verwendet werden; und
ein Sendemodul (12), das konfiguriert ist, um einen physikalischen Schichtmessergebnisbericht an einen Basisstation-NodeB, zu senden, wenn die UE gemäß den erfassten Pilotsignalen bestimmt, dass Messergebnisse der Pilotsignale der mindestens zwei Knoten eine voreingestellte Triggerbedingung erfüllen;
ein Empfangsmodul, das konfiguriert ist, eine Modusumschaltangabe zu empfangen, die durch den NodeB unter Verwendung eines gemeinsamen Downlink-Hochgeschwindigkeitssteuerkanals (HS-SCCH) gesendet wird, wobei die Modusumschaltangabe Informationen über einen Downlink-Übertragungsmodus und Informationen über einen Knoten umfasst, der Downlinkdaten sendet;
wobei die voreingestellte Triggerbedingung ist: die UE erfasst, dass ein Parameterwert der Pilotsignale, die von den mindestens zwei Knoten gesendet werden, in einen voreingestellten Schwellenbereich fällt; oder die UE erfasst, dass ein Parameterwert der Pilotsignale, die von den mindestens zwei Knoten gesendet werden, außerhalb eines voreingestellten Schwellenbereichs fällt; wobei der Parameterwert der Pilotsignale eines von Folgendem ist: eine Stärkedifferenz der Pilotsignale, eine Kanalqualitätsdifferenz und eine Pfadverstärkungsdifferenz.

5. Prozessor, wobei der Chip mindestens eine programmierbare logische Schaltung und eine Programmanweisung umfasst, und der Chip im Betrieb konfiguriert ist, ein Verfahren zur Übertragungsmodusumschaltung für die Übertragungsmodusumschaltung in einer kombinierten Zelle durchzuführen, umfassend:

Überwachen (101) von Pilotsignalen, die von mindestens zwei Knoten gesendet werden, durch eine Benutzereinrichtung, UE, wobei die Pilotsignale, die von den verschiedenen Knoten gesendet werden, unterschiedlich sind, und die Pilotsignale zum Unterscheiden der mindestens zwei Knoten verwendet werden; und
Senden (102) eines physikalischen Schichtmessergebnisberichts durch die UE an einen Basisstation-NodeB, wenn die UE gemäß den erfassten Pilotsignalen bestimmt, dass Messergebnisse der Pilotsignale der mindestens zwei Knoten eine voreingestellte Triggerbedingung erfüllen, und
Empfangen einer Modusumschaltangabe durch die UE, die durch den NodeB unter Verwendung eines gemeinsamen Downlink-Hochgeschwindigkeitssteuerkanals (High Speed-Shared Control Channel, HS-SCCH) gesendet wird, wobei die Modusumschaltangabe Informationen über einen Downlink-Übertragungsmodus und Informationen über einen Knoten umfasst, der Downlinkdaten sendet,
wobei die voreingestellte Triggerbedingung ist: die UE erfasst, dass ein Parameterwert der Pilotsignale, die von den mindestens zwei Knoten gesendet werden, in einen voreingestellten Schwellenbereich fällt; oder die UE erfasst, dass ein Parameterwert der Pilotsignale, die von den mindestens zwei Knoten gesendet werden, außerhalb eines voreingestellten Schwellenbereichs fällt; wobei der Parameterwert der Pilotsignale eines von Folgendem ist: eine Stärkedifferenz der Pilotsignale, eine Kanalqualitätsdifferenz und eine Pfadverstärkungsdifferenz.

6. Nicht-flüchtiges computerlesbares Speichermedium, umfassend eine Anweisung, wobei, wenn die Anweisung auf einem Computer abläuft, der Computer ein Verfahren zur Übertragungsmodusumschaltung für die Übertragungsmodusumschaltung in einer kombinierten Zelle durchführt, umfassend:

Überwachen (101) von Pilotsignalen, die von mindestens zwei Knoten gesendet werden, durch eine Benutzereinrichtung, UE, wobei die Pilotsignale, die von den verschiedenen Knoten gesendet werden, unterschiedlich sind, und die Pilotsignale zum Unterscheiden der mindestens zwei Knoten verwendet werden; und
Senden (102) eines physikalischen Schichtmessergebnisberichts durch die UE an einen Basisstation-NodeB, wenn die UE gemäß den erfassten Pilotsignalen bestimmt, dass Messergebnisse der Pilotsignale der mindestens zwei Knoten eine voreingestellte Triggerbedingung erfüllen, und
Empfangen einer Modusumschaltangabe durch die UE, die durch den NodeB unter Verwendung eines gemeinsamen Downlink-Hochgeschwindigkeitssteuerkanals (High Speed-Shared Control Channel, HS-SCCH) gesendet wird, wobei die Modusumschaltangabe Informationen über einen Downlink-Übertragungsmodus und Informationen über einen Knoten umfasst, der Downlinkdaten sendet,
wobei die voreingestellte Triggerbedingung ist: die UE erfasst, dass ein Parameterwert der Pilotsignale, die von den mindestens zwei Knoten gesendet werden, in einen voreingestellten Schwellenbereich fällt; oder die UE erfasst, dass ein Parameterwert der Pilotsignale, die von den mindestens zwei Knoten gesendet werden, außerhalb eines voreingestellten Schwellenbereich fällt; wobei der Parameterwert der Pilotsignale eines von Folgendem ist: eine Stärkedifferenz der Pilotsignale, eine Kanalqualitätsdifferenz und eine Pfadverstärkungsdifferenz.

**Revendications**

1. Procédé de commutation de mode de transmission pour la commutation de mode de transmission dans une cellule combinée, comprenant :

   surveiller (101), par un équipement utilisateur, UE, des signaux pilotes envoyés par au moins deux nœuds, dans lequel les signaux pilotes envoyés par les différents nœuds sont différents, et les signaux pilotes sont utilisés pour différencier les au moins deux nœuds ; et
   envoyer (102), par l'UE, un rapport de résultat de mesure de couche physique à une station de base, NodeB, si l'UE détermine, en fonction des signaux pilotes détectés, que des résultats de mesure des signaux pilotes des au moins deux nœuds répondent à une condition de déclenchement prédéfinie ; et
   recevoir, par l'UE, une indication de commutation de mode qui est envoyée par le NodeB en utilisant un canal de commande partagé à grande vitesse de liaison descendante, HS-SCCH, dans lequel l'indication de commutation de mode comprend des informations sur un mode de transmission de liaison descendante et des informations sur un nœud qui envoie des données de liaison descendante ;
   dans lequel la condition de déclenchement prédéfinie est : l'UE détecte qu'une valeur de paramètre des signaux pilotes envoyés par les au moins deux nœuds se situe dans une plage de seuil prédéfinie ; ou l'UE détecte qu'une valeur de paramètre des signaux pilotes envoyés par les au moins deux nœuds se situe au-delà d'une plage de seuil prédéfinie ; dans lequel la valeur de paramètre des signaux pilotes est l'une quelconque de ce qui suit : une différence d'intensité des signaux pilotes, une différence de qualité de canal, et une différence de gain de chemin.

2. Procédé selon la revendication 1, dans lequel les au moins deux nœuds envoient les signaux pilotes d'au moins l'une des manières suivantes : différents intervalles de temps, différents codes de brouillage, et différents codes de découpage en canaux.

3. Procédé selon la revendication 1, dans lequel le rapport de résultat de mesure de couche physique comprend au moins l'une des informations suivantes : des informations sur un indicateur de qualité de canal, des informations sur un gain de chemin, l'énergie reçue par puce divisée par la densité de puissance dans la bande, Ec/No, et des informations sur une puissance de code de signal reçu.

4. Équipement utilisateur, UE, configuré pour permettre la commutation de mode de transmission dans une cellule combinée, comprenant :

   un module de surveillance (11), configuré pour surveiller des signaux pilotes envoyés par au moins deux nœuds, dans lequel les signaux pilotes envoyés par les différents nœuds sont différents, et les signaux pilotes sont utilisés pour différencier les au moins deux nœuds ; et
   un module d'envoi (12), configuré pour envoyer un rapport de résultat de mesure de couche physique à une station de base, NodeB, si l'UE détermine, en fonction des signaux pilotes détectés, que des résultats de mesure des signaux pilotes des au moins deux nœuds répondent à une condition de déclenchement prédéfinie ;
un module de réception, configuré pour recevoir une indication de commutation de mode qui est envoyée par le NodeB en utilisant un canal de commande partagé à grande vitesse de liaison descendante, HS-SCCH, dans lequel l'indication de commutation de mode comprend des informations sur un mode de transmission de liaison descendante et des informations sur un nœud qui envoie des données de liaison descendante ;
dans lequel la condition de déclenchement prédéfinie est : l'UE détecte qu'une valeur de paramètre des signaux pilotes envoyés par les au moins deux nœuds se situe dans une plage de seuil prédéfinie ; ou l'UE détecte qu'une valeur de paramètre des signaux pilotes envoyés par les au moins deux nœuds se situe au-delà d'une plage de seuil prédéfinie ; dans lequel la valeur de paramètre des signaux pilotes est l'une quelconque de ce qui suit : une différence d'intensité des signaux pilotes, une différence de qualité de canal, et une différence de gain de chemin.

5. Processeur, dans lequel la puce comprend au moins un circuit logique programmable et une instruction de programme, et lorsqu'elle fonctionne, la puce est configurée pour exécuter un procédé de commutation de mode de transmission pour une commutation de mode de transmission dans une cellule combinée, comprenant :

surveiller (101), par un équipement utilisateur, UE, des signaux pilotes envoyés par au moins deux nœuds, dans lequel les signaux pilotes envoyés par les différents nœuds sont différents, et les signaux pilotes sont utilisés pour différencier les au moins deux nœuds ; et
envoyer (102), par l'UE, un rapport de résultat de mesure de couche physique à une station de base, NodeB, si l'UE détermine, en fonction des signaux pilotes détectés, que des résultats de mesure des signaux pilotes des au moins deux nœuds répondent à une condition de déclenchement prédéfinie ; et
recevoir, par l'UE, une indication de commutation de mode qui est envoyée par le NodeB en utilisant un canal de commande partagé à grande vitesse de liaison descendante, HS-SCCH, dans lequel l'indication de commutation de mode comprend des informations sur un mode de transmission de liaison descendante et des informations sur un nœud qui envoie des données de liaison descendante,
dans lequel la condition de déclenchement prédéfinie est : l'UE détecte qu'une valeur de paramètre des signaux pilotes envoyés par les au moins deux nœuds se situe dans une plage de seuil prédéfinie ; ou l'UE détecte qu'une valeur de paramètre des signaux pilotes envoyés par les au moins deux nœuds se situe au-delà d'une plage de seuil prédéfinie ; dans lequel la valeur de paramètre des signaux pilotes est l'une quelconque de ce qui suit : une différence d'intensité des signaux pilotes, une différence de qualité de canal, et une différence de gain de chemin.

6. Support de stockage lisible par ordinateur non transitoire, comprenant une instruction, dans lequel lorsque l'instruction s'exécute sur un ordinateur, l'ordinateur exécute un procédé de commutation de mode de transmission pour une commutation de mode de transmission dans une cellule combinée, comprenant :

surveiller (101), par un équipement utilisateur, UE, des signaux pilotes envoyés par au moins deux nœuds, dans lequel les signaux pilotes envoyés par les différents nœuds sont différents, et les signaux pilotes sont utilisés pour différencier les au moins deux nœuds ; et
envoyer (102), par l'UE, un rapport de résultat de mesure de couche physique à une station de base, NodeB, si l'UE détermine, en fonction des signaux pilotes détectés, que des résultats de mesure des signaux pilotes des au moins deux nœuds répondent à une condition de déclenchement prédéfinie ; et
recevoir, par l'UE, une indication de commutation de mode qui est envoyée par le NodeB en utilisant un canal de commande partagé à grande vitesse de liaison descendante, HS-SCCH, dans lequel l'indication de commutation de mode comprend des informations sur un mode de transmission de liaison descendante et des informations sur un nœud qui envoie des données de liaison descendante,
dans lequel la condition de déclenchement prédéfinie est : l'UE détecte qu'une valeur de paramètre des signaux pilotes envoyés par les au moins deux nœuds se situe dans une plage de seuil prédéfinie ; ou l'UE détecte qu'une valeur de paramètre des signaux pilotes envoyés par les au moins deux nœuds se situe au-delà d'une plage de seuil prédéfinie ; dans lequel la valeur de paramètre des signaux pilotes est l'une quelconque de ce qui suit : une différence d'intensité des signaux pilotes, une différence de qualité de canal, et une différence de gain de chemin.

UE monitors pilot signals sent by at least two nodes, where the pilot signals sent by the different nodes are different, and the pilot signals are used for differentiating the at least two nodes

101

The UE sends a physical layer measurement result report to a NodeB if the UE determines, according to the detected pilot signals, that measurement results of the pilot signals of the at least two nodes meet a preset trigger condition, so that the NodeB performs downlink transmission mode switching

102

FIG. 1

A NodeB receives a physical layer measurement result report sent by UE, where the physical layer measurement result report is sent by the UE to the NodeB when the UE determines that measurement results of signals of at least two nodes meet a preset trigger condition

201

The NodeB performs downlink transmission mode switching according to the physical layer measurement result report

202

FIG. 2

10

| Monitoring module | Sending module |
| 11 | 12 |

FIG. 3

20

| Receiving module | Processing module |
| 21 | 22 |

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015033321 A1

**Non-patent literature cited in the description**

- **ERICCSON et al.** Link Level Simulation Results for Combined Cell Deployment. *3GPP draft,* 10 August 2013

- **ERICCSON et al.** Mobility and Node Selection in Combined Cell Deployment for Heterogeneous Networks. *3GPP draft,* 10 August 2013